# EUROPEAN PATENT SPECIFICATION

(11) **EP 2 469 825 B1**
(45) Date of publication and mention of the grant of the patent: **29.04.2015**
(21) Application number: 12158547.5
(22) Date of filing: 24.07.2009
(51) Int. Cl.: H04M 15/00, H04L 12/14, H04W 4/24

(54) **Method and device for user information cutover**
Verfahren und Vorrichtung zur Überarbeitung von Benutzerinformationen
Procédé et dispositif pour le transfert d'informations d'utilisateur

(30) Priority: 14.08.2008 CN 200810146269
(43) Date of publication of application: 27.06.2012
(62) Divisional of application: 09806336.5
(73) Proprietor: Huawei Technologies Co., Ltd., Longgang District Shenzhen, Guangdong 518129 (CN)
(72) Inventor: Rong, Chuanxiang, 518129 Shenzhen (CN)
(74) Representative: Körber, Martin Hans

(56) References cited:
- EP-A1- 1 662 701
- EP-A1- 1 802 027
- EP-A1- 1 924 024

## Description

### FIELD OF THE INVENTION

The present invention relates to communications technologies, and in particular, to a user information cutover technology.

### BACKGROUND

With the increase of the telecom users' demand for multimedia services and the upgrade of wireless networks, the data services provided by telecom operators attract more and more attention.

However, the services provided by the telecom operator are more diversified, the charging mode is more sophisticated, and many problems are exposed. For example, in a traditional network, the charging function has been developed for different types of service systems such as voice, data, and multimedia contents concurrently. As a result, the charging for one service is independent of the charging for another service, online charging and offline charging are based on different mechanisms, and the user-segmentation marketing policy is baffled by the natural partition between PrePaid Service (PPS) user charging (namely, online charging) and Post Usage Billing (PUB) (namely, offline charging). With the emergence of new services, the operators have to invest repeatedly to construct charging systems compliant with complete charging requirements. Consequently, the charging cost is high, and the charging efficiency is low. Because each charging system has different charging capabilities, it is impossible to share information or perform bundled service marketing between different systems, and it is impossible to fulfill requirements of charging in the 3^{rd} generation (3G) application environment in the future.

In order to transfer the users from the traditional Intelligent Network (IN) to the Online Charging System (OCS), those skilled in the art put forward a user information cutover method, namely, import masses of user information from the IN to the OCS in batches. However, in the cutover process, neither the IN nor the OCS can provide charging services for the users corresponding to such user information, and the system has to request suspension of the user service. The suspension duration depends on the time spent in the cutover. Batch cutover of user information tends to take a long time, and leads to a long time of suspending the user service. Obviously, this interrupts the user in using the service, and brings loss to the operator.

EP 1802027 A1 shows a method and apparatus for invoking online charging of a service requested via a communications network and to be accessed according to a first protocol, wherein subscriber information is received from a first network element including information for invoking the online charging, and the received subscriber information is interpreted and in response to a service request online charging is invoked from a second network element for the service by means of a second protocol.

EP 1662701 A1 shows systems and methods for providing online charging in an IMS network. An IMS gateway system receives a first message from a CSCF for a call session, generates a second message that comprises a charging request to transmit to the OCS. The IMS gateway system then maps fields of the first message in a second protocol used by the OCS, and transmits the second message to the OCS. The second message provides the OCS the proper information to perform online charging functions for the call session.

### SUMMARY

The embodiments of the present invention provide a method according to claim 1 and an apparatus according to claim 4 for cutting over user information to minimize time of suspending the service for the user.

In the embodiments of the present invention, the user information obtained by the OCS is the user information of one user. That is, the user information of one user is used as a unit for cutover. Because the load of cutting over user information of one user is smaller than the load of cutting over user information in batches, the cutover of user information of one user is faster than batch cutover of user information, and the time of suspending the user service is shorter.

### BRIEF DESCRIPTION OF THE DRAWINGS

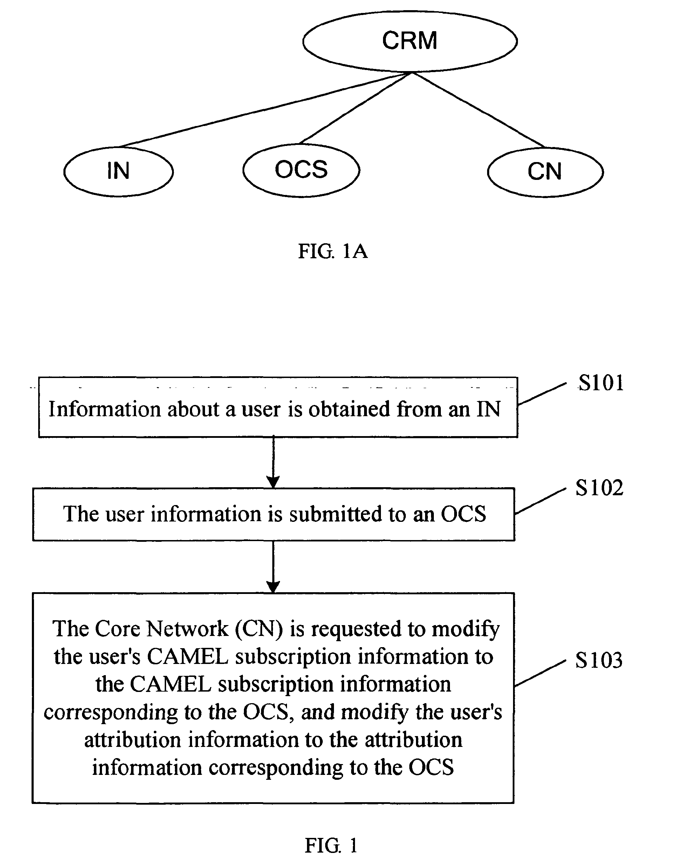

FIG. 1A shows an exemplary architecture of a user information cutover system;
FIG 1 is an exemplary flowchart of a user information cutover method;
FIG 2 shows an exemplary structure of a user information cutover apparatus;
FIG 3 is an exemplary flowchart of a user information cutover method;
FIG 4 shows an exemplary structure of a user information cutover apparatus;
FIG 5 is a flowchart of a user information cutover method in an embodiment of the present invention;
FIG 6 shows a structure of a user information cutover apparatus in an embodiment of the present invention;
FIG 7 shows a cutover scheme in an application embodiment of the present invention;
FIG 8 is a flowchart of an application embodiment of the present invention;
FIG 9 shows a cutover scheme in another application embodiment of the present invention;
FIG 10 is a flowchart of another application embodiment of the present invention; and
FIG 11 is a flowchart of another application embodiment of the present invention.

### DETAILED DESCRIPTION

First, the architecture of a user information cutover system is described below. As shown in FIG 1A, the system architecture includes: a Customer Relationship Management (CRM) system, an IN, an OCS, and a Core Network (CN). The IN includes a Service Management Point (SMP) and a Service Control Point (SCP). The OCS includes a Bill Management Point (BMP), an SCP, and a Convergent Billing Platform (CBP). The CN includes: a Home Location Register (HLR), and a Gateway General Packet Radio Service (GPRS) Supporting Node (GGSN)/Content Charging Gateway (CCG).

As shown in FIG. 1, a first exemplary user information cutover method includes the following steps:
S101: Information about a user is obtained from an IN.
S102: The user information is submitted to an OCS.
S103: The CN is requested to modify the user's Customized Application for Mobile Network Enhanced Logic (CAMEL) subscription information into the CAMEL subscription information corresponding to the OCS, and modify the user's attribution information into the attribution information corresponding to the OCS.

The performer of S101, S102, and S103 may be a CRM system. When the user information is obtained from the IN, the user information may be obtained from an SMP of the IN. When the user information is submitted to the OCS, the user information may be submitted to a BMP of the OCS. When the CN is requested to modify the user's CAMEL subscription information, the HLR of the CN may be requested to modify the user's CAMEL subscription information. When the CN is requested to modify the user's attribution information, the GGSN/CCG may be requested to modify the user's attribution information.

Before the user information is obtained from the IN, the user information may be requested from the IN. Specifically, the user information may be requested from the SMP of the IN.

After the user information is requested from the IN but before the user information is actually obtained from the IN, the IN may judge whether the user is using the service. If the user is using the service, the IN (specifically, may be the SMP of the IN) returns a request failure message; if the user is not using the service, the IN (specifically, may be the SMP of the IN) sets the user to a state of being temporarily unable to access the service, and returns the user information.

When the user information is submitted to the OCS, the user information may be submitted to the BMP of the OCS through a Web service interface.

After the user information is submitted to the OCS, the OCS (specifically, may be the BMP of the OCS) may convert the user information into the OCS format.

When the CN is requested to modify the user's CAMEL subscription information, the HLR may be requested to modify the SCP address in the user's CAMEL subscription information into the SCP address of the user's home OCS.

When the CN is requested to modify the user's attribution information, if the data service charging triggering component of the user is the user's home CBP, the GGSN/CCG may be requested to add description about the user's home CBP into a number routing table of the data service charging triggering component of the user; if the data service charging triggering component of the user is the SCP of the home OCS of the user, the SCP number in the number routing table of the data service charging triggering component of the user may be set to be the SCP ID of the home OCS of the user.

If requesting the CN to modify the user's CAMEL subscription information fails, or if requesting the CN to modify the user's attribution information fails, the OCS (specifically, may be the BMP of the OCS) may be requested to delete the user information.

After the CN is requested to modify the user's CAMEL subscription information and the CN is requested to modify the user's attribution information, the IN (specifically, may be the SMP of the IN) may further be requested to delete the user information.

It should be noted that, requesting the CN to modify the user's CAMEL subscription information may occur before, at the same time as or after requesting the CN to modify the user's attribution information.

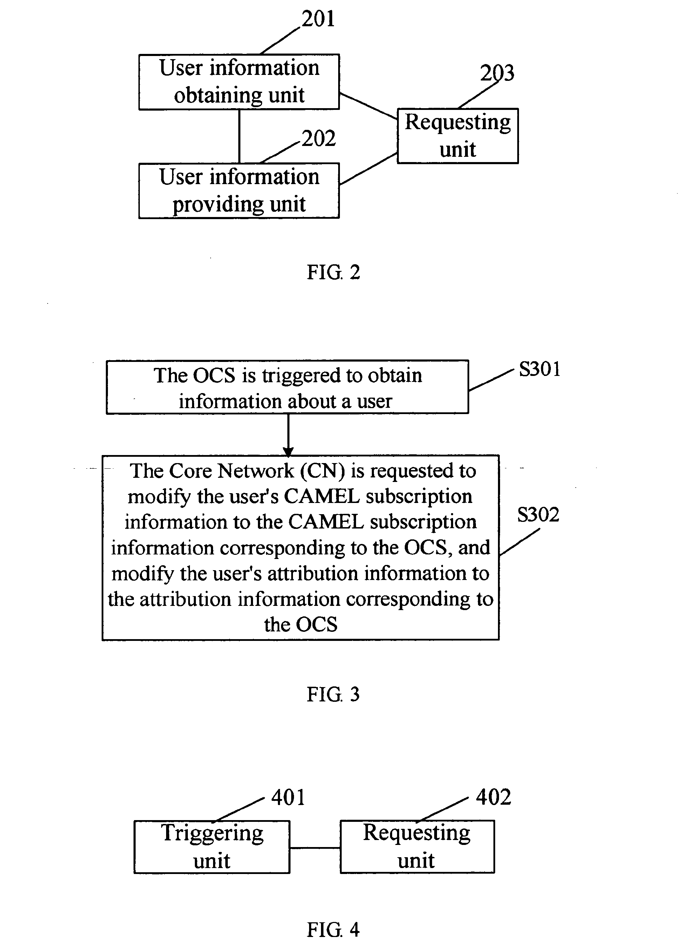

The method in FIG 1 may be implemented by various apparatuses. As shown in FIG 2, one of the user information cutover apparatuses includes:
a user information obtaining unit 201, configured to obtain information about a user from an IN;
a user information providing unit 202, configured to submit the user information obtained by the user information obtaining unit 201 to an OCS; and
a requesting unit 203, configured to: after the user information providing unit 202 submits the user information obtained by the user information obtaining unit 201 to the OCS, request a CN to modify the user's CAMEL subscription information into the CAMEL subscription information corresponding to the OCS, and request the CN to modify the user's attribution information into the attribution information corresponding to the OCS.

The user information providing unit 202 may submit the user information to the OCS through a Web service interface.

When requesting the CN to modify the user's CAMEL subscription information, the requesting unit 203 may request the HLR to modify the SCP address in the user's CAMEL subscription information into the SCP address of the user's home OCS.

When the requesting unit 203 requests the CN to modify the user's attribution information, if the data service charging triggering component of the user is the user's home CBP, the requesting unit 203 may request the GGSN/CCG to add description about the user's home CBP into a number routing table of the data service charging triggering component of the user; if the data service charging triggering component of the user is the SCP of the home OCS of the user, the requesting unit 203 may set the SCP number in the number routing table of the data service charging triggering component of the user to be the SCP ID of the home OCS of the user.

Before the user information obtaining unit 201 obtains the information about a user from the IN, the requesting unit 203 may request the user information from the IN.

If requesting the CN to modify the user's CAMEL subscription information fails, or if requesting the CN to modify the user's attribution information fails, the requesting unit 203 may request the OCS to delete the user information.

After requesting the CN to modify the user's CAMEL subscription information and requesting the CN to modify the user's attribution information, the requesting unit 203 may request the IN to delete the user information.

It should be noted that, the units in the foregoing apparatus may be applied or set in a CRM system. The working mode of such units in the CRM system is the same as the working mode in the foregoing apparatus.

FIG 3 is a flowchart of another exemplary user information cutover method. As shown in FIG 3, the method includes the following steps:
S301: An OCS is triggered to obtain information about a user.
S302: A CN is requested to modify the user's CAMEL subscription information into the CAMEL subscription information corresponding to the OCS, and modify the user's attribution information into the attribution information corresponding to the OCS.

The performer of S301 and S302 may be a CRM system. To trigger an OCS to obtain the information about a user, the BMP of the OCS may be triggered to obtain the user information. To request the CN to modify the user's CAMEL subscription information, the HLR of the CN may be requested to modify the user's CAMEL subscription information. To request the CN to modify the user's attribution information, the GGSN/CCG may be requested to modify the user's attribution information.

To trigger the OCS to obtain information about a user, a Web service request may be sent to the OCS (specifically, may be sent to the BMP of the OCS).

After the OCS is triggered to obtain the information about a user, the OCS requests the information about the user from the IN. Specifically, the BMP of the OCS requests the user information from the SMP of the IN.

After the OCS requests the user information from the IN, the IN may judge whether the user is using the service. If the user is using the service, the IN (specifically, may be the SMP of the IN) returns a request failure message; otherwise, the IN (specifically, may be the SMP of the IN) sets the user to a state of being temporarily unable to access the service, and returns the user information.

After the IN returns the user information, the OCS may convert the user information into the OCS format. Specifically, the BMP of the OCS may convert the user information into the OCS format.

When the CN is requested to modify the user's CAMEL subscription information, the HLR may be requested to modify the SCP address in the user's CAMEL subscription information into the SCP address of the user's home OCS.

When the CN is requested to modify the user's attribution information, if the data service charging triggering component of the user is the user's home CBP, the GGSN/CCG may be requested to add description about the user's home CBP into a number routing table of the data service charging triggering component of the user; if the data service charging triggering component of the user is the SCP of the home OCS of the user, the SCP number in the number routing table of the data service charging triggering component of the user may be set to be the SCP ID of the home OCS of the user.

If requesting the CN to modify the user's CAMEL subscription information fails, or if requesting the CN to modify the user's attribution information fails, the OCS (specifically, may be the BMP of the OCS) may be requested to delete the user information.

After the CN is requested to modify the user's CAMEL subscription information and the CN is requested to modify the user's attribution information, the IN (specifically, may be the SMP of the IN) may further be requested to delete the user information.

It should be noted that, requesting the CN to modify the user's CAMEL subscription information may occur before, at the same time as or after requesting the CN to modify the user's attribution information.

The method in FIG 3 may be implemented by various apparatuses. As shown in FIG 4, one of the user information cutover apparatuses includes:
a triggering unit 401, configured to trigger the OCS to obtain information about a user; and
a requesting unit 402, configured to: after the triggering unit 401 triggers the OCS to obtain the information about a user, request a CN to modify the user's CAMEL subscription information into the CAMEL subscription information corresponding to the OCS, and request the CN to modify the user's attribution information into the attribution information corresponding to the OCS.

When triggering the OCS to obtain information about a user, the triggering unit 401 may send a Web request to the OCS.

When requesting the CN to modify the user's CAMEL subscription information, the requesting unit 402 may request the HLR to modify the SCP address in the user's CAMEL subscription information into the SCP address of the user's home OCS.

When the requesting unit 402 requests the CN to modify the user's attribution information, if the data service charging triggering component of the user is the user's home CBP, the requesting unit 402 may request the GGSN/CCG to add description about the user's home CBP into a number routing table of the data service charging triggering component of the user; if the data service charging triggering component of the user is the SCP of the home OCS of the user, the requesting unit 402 may set the SCP number in the number routing table of the data service charging triggering component of the user to be the SCP ID of the home OCS of the user.

If requesting the CN to modify the user's CAMEL subscription information fails, or if requesting the CN to modify the user's attribution information fails, the requesting unit 402 may request the OCS to delete the user information.

After requesting the CN to modify the user's CAMEL subscription information or and requesting the CN to modify the user's attribution information, the requesting unit 402 may request the IN to delete the user information.

It should be noted that, the units in the apparatus shown in FIG 4 may be applied or set in a CRM system. The working mode of such units in the CRM system is the same as the working mode in the apparatus shown in FIG 4.

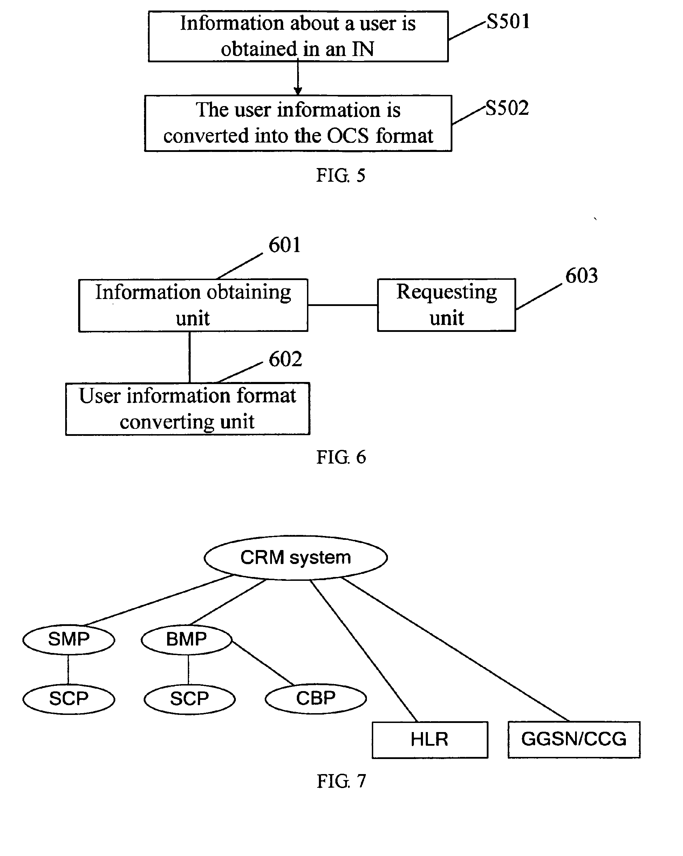

FIG 5 is a flowchart of a user information cutover method in an embodiment of the present invention. As shown in FIG 5, the method includes the following steps:
S501: Information about a user is obtained in an IN.
S502: The user information is converted into an OCS format.

The performer of S501 and S502 may be an OCS. Specifically, the performer of S501 and S502 may be the BMP of an OCS.

When the information about a user is obtained from the IN, the user information provided by the CRM system may be obtained.

When the information about a user is obtained from the IN, the user information may also be obtained from the IN directly. Specifically, the user information may be obtained from the SMP of the IN. Before the information about a user from the IN is obtained, the BMP may obtain a trigger request, sent by the CRM system, of obtaining the user information. After the trigger request, sent by the CRM system, of obtaining the user information is obtained, but before the information about a user from the IN is obtained, the IN (specifically, may be the SMP of the IN) may be requested for the information about the user.

After the user information is requested from the IN, the IN may judge whether the user is using the service. If the user is using the service, the IN (specifically, may be the SMP of the IN) returns a request failure message; if the user is not using the service, the IN (specifically, may be the SMP of the IN) sets the user to a state of being temporarily unable to access the service, and returns the user information.

After the information about a user from the IN is obtained, the IN may be requested to delete the user information. Specifically, the SMP of the IN may be requested to delete the user information. After the information about a user from the IN is obtained, the CRM system may be requested to delete the information about the user in the IN.

When the user information is converted into the OCS format, an ID of a new user in the OCS may be created out of an MSISDN in the user information, the balance in the user information may be assigned to the account balance of the new user, the bonus information in the user information may be mapped to the free resource account of the new user, the lifecycle state attribute in the user information may be mapped to the lifecycle attribute field of the new user, the familiarity number list in the user information may be mapped to the familiarity number list of the new user, a product subscription relation may be generated for the new user according to the product ID corresponding to all service types of the MSISDN, and other special information may be mapped according to specific logics.

After the information about a user from the IN is obtained, the user information may be deleted if a request of deleting the user information is received. It should be noted that, requesting the CN to modify the user's CAMEL subscription information may occur before, at the same time as or after requesting the CN to modify the user's attribution information.

The method in FIG 5 may be implemented by various apparatuses. As shown in FIG 6, one of the user information cutover apparatuses includes:
an information obtaining unit 601, configured to obtain information about a user from an IN; and
a user information format converting unit 602, configured to convert the user information obtained by the information obtaining unit 601 into an OCS format.

When obtaining the information about a user from the IN, the information obtaining unit 601 may obtain the user information provided by the CRM system.

When obtaining the information about a user from the IN, the information obtaining unit 601 may also obtain the user information from the IN directly. Before obtaining the information about a user from the IN, the information obtaining unit 601 may obtain a trigger request, sent by the CRM system, of obtaining the user information.

The foregoing apparatus may further include a requesting unit 603. The requesting unit 603 is configured to request the information about the user from the IN after the information obtaining unit 601 obtains the trigger request, sent by the CRM system, of obtaining the user information but before the information obtaining unit 601 obtains the information about the user in the IN.

The requesting unit 603 is further configured to: after the information obtaining unit 601 obtains the information about a user from the IN, request the IN to delete the user information, or request the CRM system to delete the information about the user in the IN.

The user information format converting unit 602 may include:
a new user ID creating unit, configured to create an ID of a new user in the OCS out of an MSISDN in the user information obtained by the information obtaining unit 601;
a balance assigning unit, configured to assign the balance in the user information obtained by the information obtaining unit 601 to the account balance of the new user;
a bonus information mapping unit, configured to map the bonus information in the user information obtained by the information obtaining unit 601 to the free resource account of the new user;
a lifecycle state attribute mapping unit, configured to map the lifecycle state attribute in the user information obtained by the information obtaining unit 601 to the lifecycle attribute field of the new user;
a familiarity number list mapping unit, configured to map the familiarity number list in the user information obtained by the information obtaining unit 601 to the familiarity number list of the new user;
a subscription relation generating unit, configured to generate a product subscription relation for the new user according to the product ID corresponding to all service types of the MSISDN obtained by the information obtaining unit 601; and
a special information mapping unit, configured to map, according to specific logics, other special information in the user information obtained by the information obtaining unit 601.

It should be noted that, the units in the apparatus shown in FIG 6 may be applied or set in an OCS, and more specifically, in the BMP of an OCS. The working mode of such units in the CRM system or the BMP of the OCS is the same as the working mode in the apparatus shown in FIG 6.

In order to help those skilled in the art understand the present invention more clearly, three application embodiments of the user information cutover method are given below.

One application embodiment is based on the cutover scheme shown in FIG 7.

An IN includes an SMP and an SCP. The SMP provides a Man-Machine Language (MML) interface to the outside of the IN.

An OCS includes a BMP, an SCP, and a CBP (or an online charging interface of the OCS). The BMP provides a Web service interface to the outside of the OCS. The SCP is a call control node that supports the CBP/OCS charging.

The HLR is configured to store subscription information. The GGSN/CCG is a trigger point of data service charging. The CRM system provides operation management function of the IN and the OCS.

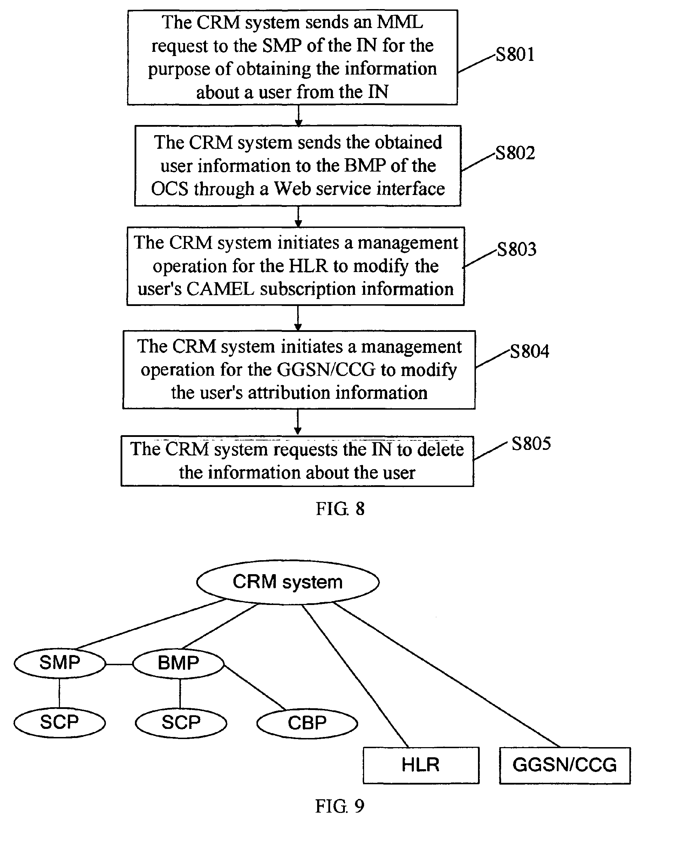

As shown in FIG 8, the process of this application embodiment includes the following steps:
S801: The CRM system sends an MML request to the SMP of the IN for the purpose of obtaining the information about a user from the IN. The user information may include user attributes, activated services, free amount, account balance, service information, and service control parameters. If the user is using the service, the SMP returns a request failure message to the CRM system. If the user is not using the service, the SMP sets the user in the IN to a state of being temporarily unable to access the service, and returns the user information to the CRM system. Besides, the CRM system may send an MML request to the SMP of the IN when the user requests to cut over the user information.
S802: The CRM system sends the obtained user information to the BMP of the OCS through a Web service interface.

After obtaining the user information, the BMP maps and converts the user information. For example, the BMP may perform one of the following operations:
(1) creating an ID for a new user in the OCS out of the MSISDN in the user information;
(2) assigning the account balance in the user information to the account balance of the new user;
(3) mapping the bonus information in the user information to the free resource account of the new user;
(4) mapping the lifecycle state attribute in the user information to the lifecycle attribute field of the new user;
(5) mapping the familiarity number list in the user information to the familiarity number list of the new user;
(6) generating a product subscription relation for the new user according to the product ID corresponding to all service types of the MSISDN; and
(7) mapping other special information according to specific logics, if any other special information exists.

If the sending of the obtained user information to the BMP of the OCS fails, the CRM system gives up the cutover task.

S803: The CRM system initiates a management operation to the HLR, for modifying the user's CAMEL subscription information. Specifically, the SCP address in the subscription information is modified into the SCP address corresponding to the OCS.

If this step fails, the CRM system requests the BMP to delete the new user information.

S804: The CRM system initiates a management operation to the GGSN/CCG for modifying the user's attribution information. Specifically, the number routing table of the data service charging triggering component is modified. Table 1 is an exemplary number routing table.

**Table 1**

| **Fiel Name** | **Fiel Name** | **Value Range** | **Description** |
|---|---|---|---|
| #MSISDN | Character type (20 bits) | | Mobile Station International ISDN number (MSISDN) |
| SCPNo. | Integer type (Int) | >0 | SCPID to which the MSISDN belongs |
| CBPNo. | Integer type (Int) | ≥0 | CBPID to which the MSISDN belongs. When the value of this field is 0, it indicates that the user is an IN user and has no home CBP. |

The MSISDN is the current number, the "SCPNo." is the SCPID to which the MSISDN belongs, and the "CBPNo." is the CBPID to which the MSISDN belongs.

The GGSN/CCG may forward each data service charging request of the MSISDN to the corresponding CBP according to the number routing table.

If S804 fails, the CRM system performs the following rollback operations:
request the HLR to modify the SCP address of the OCS corresponding to the new user into the SCP address of the IN, and specifically, the CRM system may send such a request to the HLR; and
request the BMP to delete the new user information, and specifically, the CRM system may send such a request to the BMP.

S805: The CRM system requests the IN to delete the user information, and specifically, the CRM system may send such a request to the SMP.

If this step fails, the CRM system may not perform a rollback operation.

It should be noted that, S803 may occur before, at the same time as, or after S804.

In this application embodiment, the CRM system obtains the user information from the IN directly, and then submits the user information to the OCS. In fact, the OCS may obtain user information from the IN as triggered by the CRM system, as detailed in the following application embodiment.

Another application embodiment is based on the cutover scheme shown in FIG 9.

Like FIG 7, the IN includes an SMP and an SCP. The SMP provides an MML interface to the outside of the IN. An OCS includes a BMP, an SCP, and a CBP (or an online charging interface of the OCS). The BMP provides a Web service interface to the outside of the OCS. The SCP is a call control node that supports the CBP/OCS charging. The HLR is configured to store the subscription information. The GGSN/CCG is a trigger point of data service charging. The CRM system provides operation management function of the IN and the OCS. Unlike FIG 7, the BMP of the OCS can exchange information with the SMP of the IN directly.

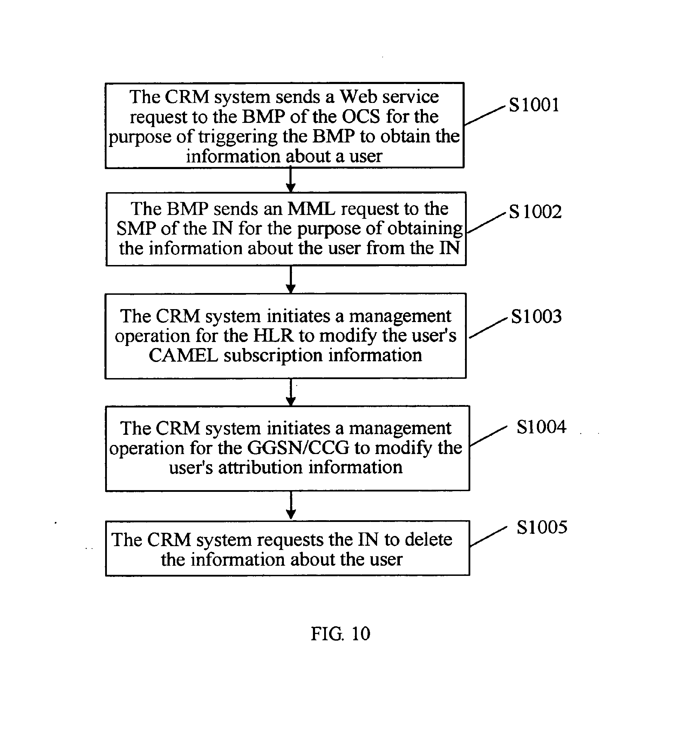

As shown in FIG 10, the process of this application embodiment includes the following steps:
S1001: The CRM system sends a Web service request to the BMP of the OCS for the purpose of triggering the BMP to obtain information about a user.
S1002: The BMP sends an MML request to the SMP of the IN for the purpose of obtaining the information about the user in the IN. The user information may include user attributes, activated services, free amount, account balance, service information, and service control parameters. If the user is using the service, the SMP returns a request failure message to the CRM system. If the user is not using the service, the SMP sets the user in the IN to a state of being temporarily unable to access the service, and returns the user information to the CRM system.

After obtaining the user information, the BMP maps and converts the user information. For example, the BMP may perform one of the following operations:
(1) creating an ID for a new user in the OCS out of an MSISDN;
(2) assigning the account balance in the user information to the account balance of the new user;
(3) mapping the bonus information in the user information to the free resource account of the new user;
(4) mapping the lifecycle state attribute in the user information to the lifecycle attribute field of the new user;
(5) mapping the familiarity number list in the user information to the familiarity number list of the new user;
(6) generating a product subscription relation for the new user according to the product ID corresponding to all service types of the MSISDN; and
(7) mapping the special information according to specific logics, if any other special information exists.

If the BMP fails in obtaining the information about the user in the IN, the BMP returns a failure message to the CRM system, and the CRM system gives up the cutover task.

S1003: The CRM system initiates a management operation to the HLR, for modifying the user's CAMEL subscription information. Specifically, the SCP address in the subscription information is modified into the SCP address corresponding to the OCS.

If this step fails, the CRM system requests the BMP to delete the new user information.

S1004: The CRM system initiates a management operation to the GGSN/CCG, for modifying the user's attribution information. Specifically, the number routing table of the data service charging triggering component is modified. Table 1 is an exemplary number routing table, where the MSISDN is the current number, the "SCPNo." is the SCPID to which the MSISDN belongs, and the "CBPNo." is the CBPID to which the MSISDN belongs.

The GGSN/CCG may forward each data service charging request of the MSISDN to the corresponding CBP according to the number routing table.

If S1004 fails, the CRM system performs the following rollback operations:
request the HLR to modify the SCP address of the OCS corresponding into the new user to the SCP address of the IN, and specifically, the CRM system may send such a request to the HLR; and
request the BMP to delete the new user information, and specifically, the CRM system may send such a request to the BMP.

S1005: The CRM system requests the IN to delete the user information, and specifically, the CRM system may send such a request to the SMP

If this step fails, the CRM system may not perform a rollback operation:
It should be noted that, S1003 may occur before, at the same time as, or after S1004.

In this application embodiment, after initiating a management operation to the HLR and the GGSN/CCG respectively, the CRM system requests the IN to delete the user information. In fact, after obtaining the user information, the BMP may request the IN to delete the user information, as detailed in the following application embodiment.

Another application embodiment is based on the cutover scheme shown in FIG 9.

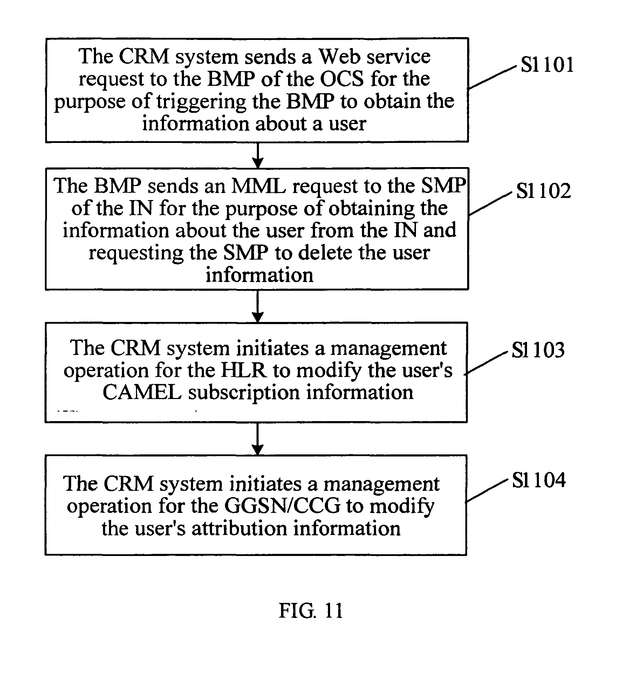

As shown in FIG 11, the process of this application embodiment includes the following steps:
S1101: The CRM system sends a Web service request to the BMP of the OCS for the purpose of triggering the BMP to obtain information about a user.
S1102: The BMP sends an MML request to the SMP of the IN for the purpose of obtaining the information about the user in the IN. The user information may include user attributes, activated services, free amount, account balance, service information, and service control parameters. If the user is using the service, the SMP returns a request failure message to the CRM system. If the user is not using the service, the SMP sets the user in the IN to a state of being temporarily unable to access the service, and returns the user information to the CRM system.

After obtaining the user information, the BMP maps and converts the user information. For example, the BMP may perform one of the following operations:
(1) creating an ID for a new user in the OCS out of the MSISDN;
(2) assigning the account balance in the user information to the account balance of the new user;
(3) mapping the bonus information in the user information to the free resource account of the new user;
(4) mapping the lifecycle state attribute in the user information to the lifecycle attribute field of the new user;
(5) mapping the familiarity number list in the user information to the familiarity number list of the new user;
(6) generating a product subscription relation for the new user according to the product ID corresponding to all service types of the MSISDN; and
(7) mapping the special information according to specific logics, if any other special information exists.

If the BMP maps and converts the user information successfully, the BMP requests the SMP to delete the user information, and specifically, sends such a request to the SMP. If the BMP fails in mapping or converting the user information, the BMP may notify the CRM system to return a failure message, and delete the user information.

If the BMP fails in obtaining the information about the user in the IN, the BMP returns a failure message to the CRM system, and the CRM system gives up the cutover task.

S1103: The CRM system initiates a management operation to the HLR, for modifying the user's CAMEL subscription information. Specifically, the SCP address in the subscription information is modified into the SCP address corresponding to the OCS.

If this step fails, the CRM system requests the BMP to delete the new user information.

S1104: The CRM system initiates a management operation to the GGSN/CCC; for modifying the user's attribution information. Specifically, the number routing table of the data service charging triggering component is modified. Table 1 is an exemplary number routing table, where the MSISDN is the current number, the "SCPNo." is the SCPID to which the MSISDN belongs, and the "CBPNo." is the CBPID to which the MSISDN belongs.

The GGSN/CCG may forward each data service charging request of the MSISDN to the corresponding CBP according to the number routing table.

If S1104 fails, the CRM system performs the following rollback operations:
request the HLR to modify the SCP address of the OCS corresponding to the new user into the SCP address of the IN, and specifically, the CRM system may send such a request to the HLR; and
request the BMP to delete the new user information, and specifically, the CRM system may send such a request to the BMP

S1103 may occur before, at the same time as or after S1104.

In conclusion, in the embodiments of the present invention, because the load of cutting over user information of one user is smaller than the load of cutting over user information in batches, the time of suspending the user service is shorter, and the service consumption decrease caused by the suspension is avoided. Because no other user information needs to be cut over at the same time, the cutover risk is lowered, and the following circumstance never occurs: The cutover of information about other users is interrupted by failure of cutting over information about one or more users in batch cutover.

It is understandable to those skilled in the art that all or part of the steps of the foregoing embodiments may be implemented by hardware instructed by a computer program. The program may be stored in a computer-readable storage medium. When being executed, the program performs the processes covered in the foregoing embodiments. The storage medium may be a magnetic disk, Compact Disk (CD), Read-Only Memory (ROM), or Random Access Memory (RAM).

Although the invention is described through some exemplary embodiments, the invention is not limited to such embodiments. It is apparent that those skilled in the art can make modifications and variations to the invention without departing from the scope of the invention. The invention is intended to cover the modifications and variations provided that they fall in the scope of protection defined by the following claims or their equivalents.

## Claims

1. A user information cutover method, comprising:
obtaining (S501), by an Online Charging System, OCS, information about a user in an Intelligent Network, IN; and
converting (S502), by the OCS, the user information into an OCS format;
wherein converting the user information into an OCS format further comprises:
creating an ID for a new user in the OCS out of a MSISDN in the user information;
assigning an account balance in the user information to an account balance of the new user;
mapping a bonus information in the user information to a free resource account of the new user;
mapping a lifecycle state attribute in the user information to a lifecycle attribute field of the new user;
mapping a familiarity number list in the user information to a familiarity number list of the new user;
generating a product subscription relation for the new user according to a product ID corresponding to all service types of the MSISDN; and
mapping a special information according to specific logics, if any other special information exists.

2. The user information cutover method according to claim 1 or 2, wherein obtaining information about a user in an IN further comprises:
obtaining the user information provided by a Customer Relationship Management, CRM, system, or obtaining the user information from the IN directly.

3. The user information cutover method according to claim 1 or 2, wherein, before obtaining information about a user in an IN, the method further comprises:
sending a request to the IN for obtaining the user information; and
judging, by the IN, whether the user is using the service; if the user is using the service, returning, by the IN, a request failure message corresponding to the request for obtaining the user information; if the user is not using the service, setting, by the IN, the user to a state of being unable to access the service temporarily, and returning the user information.

4. A user information cutover apparatus, comprising:
an information obtaining unit (601), configured to obtain information about a user from an Intelligent Network, IN; and
a user information format converting unit (602), configured to convert the user information obtained by the information obtaining unit into an OCS format;
wherein the user information format converting unit (602) comprises:
a new user ID creating unit, configured to create an ID of a new user in the OCS out of an MSISDN in the user information obtained by the information obtaining unit;
a balance assigning unit, configured to assign a balance in the user information obtained by the information obtaining unit (601) to an account balance of the new user;
a bonus information mapping unit, configured to map a bonus information in the user information obtained by the information obtaining unit (601) to a free resource account of the new user;
a lifecycle state attribute mapping unit, configured to map a lifecycle state attribute in the user information obtained by the information obtaining unit (601) to a lifecycle attribute field of the new user;
a familiarity number list mapping unit, configured to map a familiarity number list in the user information obtained by the information obtaining unit (601) to a familiarity number list of the new user;
a subscription relation generating unit, configured to generate a product subscription relation for the new user according to a product ID corresponding to all service types of the MSISDN obtained by the information obtaining unit (601); and
a special information mapping unit, configured to map other special information in the user information obtained by the information obtaining unit (601) according to specific logics.

## Patentansprüche

1. Anwenderinformationsumstellungsverfahren, das Folgendes umfasst:
Erhalten (S501) durch ein Online-Gebührenberechnungssystem (Online Charging System, OCS) von Informationen über einen Anwender in einem intelligenten Netz, IN; und
Umsetzen (S502) durch das OCS der Anwenderinformationen in ein OCS-Format;
wobei das Umsetzen der Anwenderinformationen in ein OCS-Format ferner Folgendes umfasst:
Erzeugen einer ID für einen neuen Anwender in dem OCS aus einer MSISDN in den Anwenderinformationen;
Zuweisen eines Kontostands in den Anwenderinformationen zu einem Kontostand des neuen Anwenders;
Abbilden von Bonusinformationen in den Anwenderinformationen auf ein Konto freier Betriebsmittel des neuen Anwenders;
Abbilden eines Lebenszyklusattributs in den Anwenderinformationen auf ein Lebenszyklusattributfeld des neuen Anwenders;
Abbilden einer Liste bekannter Nummern in den Anwenderinformationen auf eine Liste bekannter Nummern des neuen Anwenders;
Erzeugen einer Produktabonnementsbeziehung für den neuen Anwender gemäß einer Produkt-ID, die allen Diensttypen der MSISDN entspricht; und
Abbilden einer speziellen Information gemäß spezifischer Logik, falls irgendwelche anderen speziellen Informationen vorhanden sind.

2. Anwenderinformationsumstellungsverfahren nach Anspruch 1 oder 2, wobei das Erhalten von Informationen über einen Anwender in einem IN ferner Folgendes umfasst:
Erhalten der Anwenderinformationen, die durch ein Kundenbeziehungsmanagement-System (Customer Relationship Management system, CRM-System) bereitgestellt sind, oder Erhalten der Anwenderinformationen direkt aus dem IN.

3. Anwenderinformationsumstellungsverfahren nach Anspruch 1 oder 2, wobei das Verfahren vor dem Erhalten von Informationen über einen Anwender in einem IN ferner Folgendes umfasst:
Senden einer Anforderung zu dem IN zum Erhalten der Anwenderinformationen;
und
Beurteilen durch das IN, ob der Anwender den Dienst verwendet; falls der Anwender den Dienst verwendet, Zurückgeben durch das IN einer Anforderungsfehlernachricht, die der Anforderung zum Erhalten der Anwenderinformationen entspricht; falls der Anwender den Dienst nicht verwendet, Versetzen des Anwenders durch das IN in einen Zustand, so dass er vorübergehend nicht auf den Dienst zugreifen kann, und
Zurückgeben der Anwenderinformationen.

4. Anwenderinformationsumstellungsvorrichtung, die Folgendes umfasst:
eine Informationserhalteeinheit (601), die konfiguriert ist, Informationen über einen Anwender von einem intelligenten Netz, IN, zu erhalten; und
eine Anwenderinformationsformatumsetzungseinheit (602), die konfiguriert ist, die Anwenderinformationen, die durch die Informationserhalteeinheit erhalten werden, in ein OCS-Format umzusetzen;
wobei die Anwenderinformationsformatumsetzungseinheit (602) Folgendes umfasst:
eine Erzeugungseinheit für eine neue Anwender-ID, die konfiguriert ist, eine ID eines neuen Anwenders in dem OCS aus einer MSISDN in den Anwenderinformationen, die durch die Informationserhalteeinheit erhalten wurden,
zu erzeugen;
eine Saldozuweisungseinheit, die konfiguriert ist, einen Saldo in den Anwenderinformationen, die durch die Informationserhalteeinheit (601) erhalten wurden, einem Kontostand des neuen Anwenders zuzuweisen;
eine Bonusinformationsabbildungseinheit, die konfiguriert ist, Bonusinformationen in den Anwenderinformationen, die durch die Informationserhalteeinheit (601) erhalten wurden, auf ein Konto freier Betriebsmittel des neuen Anwenders abzubilden;
eine Lebenszykluszustandsattributabbildungseinheit, die konfiguriert ist, ein Lebenszykluszustandsattribut in den Anwenderinformationen, die durch die Informationserhalteeinheit (601) erhalten wurden, auf ein Lebenszyklusattributfeld des neuen Anwenders abzubilden;
eine Abbildungseinheit für die Liste bekannter Nummern, die konfiguriert ist, eine Liste bekannter Nummern in den durch die Informationserhalteeinheit (601) erhaltenen Anwenderinformationen auf eine Liste bekannter Nummern des neuen Anwenders abzubilden;
eine Abonnementsbeziehungserzeugungseinheit, die konfiguriert ist, eine Produktabonnementsbeziehung für den neuen Anwender gemäß einer Produkt-ID,
die allen Diensttypen der MSISDN, die durch die Informationserhalteeinheit (601) erhalten wurde, entspricht, zu erzeugen; und
eine Abbildungseinheit für spezielle Informationen, die konfiguriert ist, weitere spezielle Informationen in den durch die Informationserhalteeinheit (601) erhaltenen Anwenderinformationen gemäß einer spezifischen Logik abzubilden.

## Revendications

1. Procédé de transfert d'informations d'utilisateur, comprenant :
l'obtention (S501), par un système de facturation en ligne, OCS, d'informations relatives à un utilisateur dans un réseau intelligent, IN ; et
la conversion (S502), par l'OCS, des informations d'utilisateur en un format OCS ;
dans lequel la conversion des informations d'utilisateur en le format OCS comprend en outre :
la création d'un ID d'un nouvel utilisateur dans l'OCS à partir d'un MSISDN dans les informations d'utilisateur ;
l'attribution d'un solde de compte dans les informations d'utilisateur à un solde de compte du nouvel utilisateur ;
le mappage d'une information de bonus dans les informations d'utilisateur avec un compte de ressource libre du nouvel utilisateur ;
le mappage d'un attribut d'état de cycle de vie dans les informations d'utilisateur avec un champ d'attribut de cycle de vie du nouvel utilisateur ;
le mappage d'une liste de numéros familiers dans les informations d'utilisateur avec une liste de numéros familiers du nouvel utilisateur ;
la génération d'une relation d'abonnement de produit du nouvel utilisateur en fonction d'un ID de produit correspondant à tous les types de service du MSISDN ; et
le mappage d'informations spéciales en fonction de logiques spécifiques, si toutes autres informations spéciales existent.

2. Procédé de transfert d'informations d'utilisateur selon la revendication 1 ou 2, dans lequel l'obtention d'informations relatives à un utilisateur dans un IN comprend en outre :
l'obtention des informations d'utilisateur fournies par un système de gestion de relations clients, CRM, ou l'obtention des informations d'utilisateur directement à partir de l'IN.

3. Procédé de transfert d'informations d'utilisateur, selon la revendication 1 ou 2, comprenant en outre, avant l'obtention des informations relatives à un utilisateur dans un IN :
l'envoi à l'IN d'une requête d'obtention des informations d'utilisateur ; et
le jugement, par l'IN, que l'utilisateur utilise ou non le service ; si l'utilisateur utilise le service, le renvoi, par l'IN, d'un message d'échec de requête correspondant à la requête d'obtention des informations d'utilisateur ; si l'utilisateur n'utilise pas le service, la mise, par l'IN, de l'utilisateur dans un état d'impossibilité temporaire d'accéder au service, et le renvoi des informations d'utilisateur.

4. Appareil de transfert d'informations d'utilisateur, comprenant :
une unité d'obtention d'informations (601), configurée pour obtenir des informations relatives à un utilisateur depuis un réseau intelligent, IN ; et
une unité de conversion de format d'informations d'utilisateur (602), configurée pour convertir les informations d'utilisateur obtenues par l'unité d'obtention d'informations en un format OCS ;
dans lequel l'unité de conversion de format d'informations d'utilisateur (602) comprend:
une unité de création d'ID de nouvel utilisateur, configurée pour créer un ID d'un nouvel utilisateur dans l'OCS à partir d'un MSISDN dans les informations d'utilisateur obtenues par l'unité d'obtention d'informations ;
une unité d'attribution de solde, configurée pour attribuer un solde dans les informations d'utilisateur obtenues par l'unité d'obtention d'informations (601) à un solde de compte du nouvel utilisateur ;
une unité de mappage d'information de bonus, configurée pour mapper une information de bonus dans les informations d'utilisateur obtenues par l'unité d'obtention d'informations (601) avec un compte de ressource libre du nouvel utilisateur ;
une unité de mappage d'attribut d'état de cycle de vie, configurée pour mapper un attribut d'état de cycle de vie dans les informations d'utilisateur obtenues par l'unité d'obtention d'informations (601) avec un champ d'attribut de cycle de vie du nouvel utilisateur ;
une unité de mappage de liste de numéros familiers, configurée pour mapper une liste de numéros familiers dans les informations d'utilisateur obtenues par l'unité d'obtention d'informations (601) avec une liste de numéros familiers du nouvel utilisateur ;
une unité de génération de relation d'abonnement, configurée pour générer une relation d'abonnement de produit du nouvel utilisateur en fonction d'un ID de produit correspondant à tous les types de services du MSISDN obtenus par l'unité d'obtention d'informations (601) ; et
une unité de mappage d'informations spéciales, configurée pour mapper d'autres informations spéciales dans les informations d'utilisateur obtenues par l'unité d'obtention d'informations (601) en fonction de logiques spécifiques.
